(19) Europäisches Patentamt
European Patent Office
Office européen des brevets

(11) **EP 3 476 726 B1**

(12) **EUROPEAN PATENT SPECIFICATION**

(45) Date of publication and mention of the grant of the patent:
**19.01.2022 Bulletin 2022/03**

(21) Application number: **18196728.2**

(22) Date of filing: **26.09.2018**

(51) International Patent Classification (IPC):
**B64C 17/10** [(2006.01)]   **B64D 37/28** [(2006.01)]
**G05D 1/00** [(2006.01)]   **G05D 1/08** [(2006.01)]
**G01M 1/12** [(2006.01)]

(52) Cooperative Patent Classification (CPC):
**B64C 17/10; B64D 37/28; G01M 1/127**

(54) **METHOD AND SYSTEM FOR IMPROVING AIRCRAFT FUEL EFFICIENCY**

VERFAHREN UND SYSTEM ZUR VERBESSERUNG DES KRAFTSTOFFVERBRAUCHS BEI FLUGZEUGEN

PROCÉDÉ ET SYSTÈME POUR AMÉLIORER LA CONSOMMATION DU CARBURANT D'AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2017 US 201715797118**

(43) Date of publication of application:
**01.05.2019 Bulletin 2019/18**

(73) Proprietor: **The Boeing Company**
**Chicago, IL 60606-2016 (US)**

(72) Inventors:
• **KIM, Geun I.**
**CHICAGO, IL Illinois 60606-2016 (US)**
• **FREGNANI, José A.**
**CHICAGO, IL Illinois 60606-2016 (US)**
• **ROHR, Tim**
**CHICAGO, IL Illinois 60606-2016 (US)**

(74) Representative: **Plasseraud IP**
**66, rue de la Chaussée d'Antin**
**75440 Paris Cedex 09 (FR)**

(56) References cited:
**EP-A2- 2 362 289     WO-A2-2005/065071**
**GB-A- 2 190 501      US-A1- 2005 288 895**
**US-A1- 2010 044 515**

EP 3 476 726 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present disclosure relates to flight management systems for aircraft, and more particularly, flight management systems that utilize aircraft and aerodynamic parameters of an aircraft to optimize fuel usage.

Prior to the takeoff of a commercial aircraft, such as a commercial passenger aircraft, the dispatch procedure includes calculating the center of gravity (CG) of the aircraft. The pilot, a member of the flight crew, or other airline personnel calculate the aircraft CG utilize data from published weight and balance tables developed specifically for the aircraft to ensure that the CG is within the flight envelope of the aircraft for the entire flight.

Most commercial aircraft have a central fuel tank, located in the fuselage between the wings, and wing tanks located within the wings. The weights of the fuel in these tanks are used in determining the aircraft CG. During a flight, the CG of the aircraft changes constantly as the fuel in each of these tanks is burned. This inflight CG movement due to fuel burn is computed by the flight management system (FMS) of the aircraft. The aircraft CG movement curve, or fuel vector, is calculated by the FMS from aircraft zero fuel weight (ZFW) to aircraft takeoff weight (TOW). However, this curve typically is not displayed to the pilot or flight crew, and is not in the aircraft's weight and balance tables.

During flight, the aircraft FMS calculates a predictive fuel burn from takeoff to landing. The flightpath of the aircraft is divided into legs separated by waypoints. The waypoints are defined by geographic coordinates and mark the beginning and end of each flight leg. Thus, for each flight leg between two waypoints, there is an associated distance, time, magnetic heading, and fuel burn. The FMS is programmed to calculate predictive fuel burn for each individual leg of the flightpath and display it on the control display unit (CDU) located on the instrument panel in the flight deck.

Changes in the aircraft CG during flight caused by the burning of fuel must be compensated for by changes in the flight control surfaces on the aircraft, which create aerodynamic drag, known as longitudinal trim drag. This kind of drag can be offset somewhat by selecting which fuel tanks to use first, and if available, by actively pumping fuel between separate tanks. Thus, the change in CG during a flight leg changes the trim drag, which affects the predictive fuel burn calculated for that leg. For example, if the CG of an aircraft moves aft during a flight, the trim drag is reduced, which reduces the required fuel burn.

However, rather than use a real-time, current aircraft CG to calculate predictive fuel burn at each waypoint of a flightpath, the FMS uses aircraft performance databases that use the same fixed or reference CG for all waypoints. For example, a reference CG for a particular aircraft may be selected to be fixed at 23.8% aft of the leading edge of the mean aerodynamic chord (MAC) of the wing. Consequently, this value for "cruise CG" (CRZ CG) is a default entry in the flight computer of the FMS, but can be manually overridden by crews in the flight computer of the FMS during the pre-flight procedure. In either case, this value is used by the FMS to calculate maximum altitude and the maneuver margin for each waypoint.

EP 2362289 A2, in accordance with its abstract, states methods and systems for presenting operating information for an aircraft in a vertical profile displayed on a display device associated with the aircraft. The vertical profile graphically depicts at least a portion of a flight plan for the aircraft, wherein the portion of the flight plan includes a plurality of reference points. The method involves calculating, for each reference point of the plurality of reference points, a predicted value of a first operating parameter for the aircraft at the respective reference point based at least in part on current status information for the aircraft, resulting in predicted values for the first operating parameter, and displaying the predicted values for the first operating parameter in the vertical profile.

WO 2005/065071 A2, in accordance with its abstract, states an aircraft designed for transonic speed comprises an airfoil, a nacelle, an engine, and an inverted V-tail. The nacelle is mounted on the lower aerodynamic airfoil surface and behind the trailing edge of the airfoil. The engine is enclosed within and structurally supported by the nacelle. The inverted-V tail is coupled to the airfoil at a position on the upper aerodynamic surface directly across the airfoil surface so that the inverted-V tail structurally supports the nacelle and engine in combination with support from the airfoil.

Consequently, there is a need for a flight management system that more accurately reflects the CG of an aircraft during flight in order to calculate an accurate predictive fuel burn, and other performance factors as maximum altitude and maneuver margin.

SUMMARY

The present disclosure is a method and system for improving aircraft fuel efficiency that uses a real-time calculation of aircraft center of gravity during flight to determine a fuel burn prediction for each leg of a flight. These calculated fuel burn predictions are adjustments from fuel burn predictions based on a static center of gravity and are used to adjust the performance of the aircraft. This results is a more efficient use of fuel and more accurate calculations of maximum altitude and maneuver margins of the aircraft during flight.

In one example, a method for improving fuel efficiency of an aircraft is defined in accordance with claim 1.

In another example not being claimed, a method for improving inflight fuel efficiency of an aircraft includes receiving data indicative of a current aircraft fuel weight by flight management system onboard the aircraft during a flight of the aircraft; calculating a current center of gravity position of the aircraft from the current aircraft fuel weight by the flight management system; calculating a longitudinal trim drag factor for the aircraft from the current center of gravity by the flight management system; adjusting a fuel burn prediction for the aircraft using the longitudinal trim factor by the flight management system; and adjusting a performance of the aircraft in response to the fuel burn prediction, either automatically by the flight management system or manually by prompting a pilot of the aircraft.

In yet another example, a system for improving inflight fuel efficiency of an aircraft is defined in accordance with claim 13.

Other objects and advantages of the disclosed method and system for improving aircraft fuel efficiency will be apparent from the following description, the accompanying drawings, and the appended claims.

BRIEF DESCRIPTION OF THE DRAWINGS

Fig. 1 is a schematic diagram showing the components of an exemplary example of the disclosed system for improving aircraft fuel efficiency in an aircraft;
Fig. 1A is a more detailed schematic representation of the system of Fig. 1;
Fig. 2 is a flow chart showing the disclosed method for improving aircraft fuel efficiency; and
Fig. 3 is a schematic diagram of the aircraft parameters used to calculate the trim drag factor used in the disclosed method and system.

DETAILED DESCRIPTION

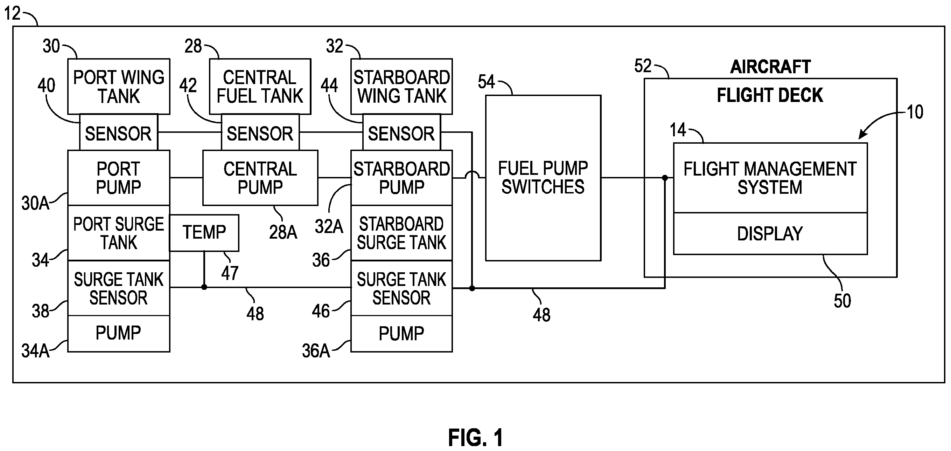

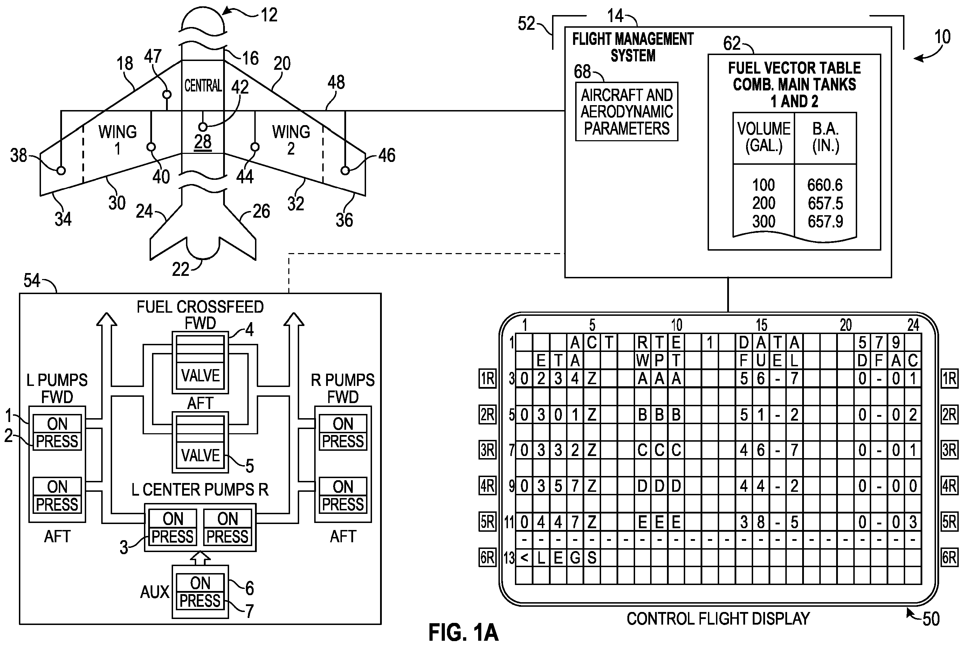

As shown in Figs. 1 and 1A, a system, generally designated 10, for improving inflight fuel efficiency of an aircraft 12 in an exemplary example includes a flight management system (FMS) 14 that is connected to receive data indicative of current aircraft fuel weight during a flight of the aircraft. The aircraft 12 may take the form of a passenger aircraft, a cargo aircraft, a military aircraft, a civilian or commercial aircraft, or a spacecraft, and may be piloted, flown by the FMS 14, or remotely guided.

The aircraft 12 includes a fuselage 16, port and starboard wings 18, 20, which may or may not be tapered or swept, and a tail assembly 22 having port and starboard horizontal stabilizers 24, 26 and a vertical stabilizer (not shown). The aircraft 12 includes a central fuel tank 28, located within the fuselage 16, and wing tanks 30, 32 located within port and starboard wings 18, 20, respectively. The aircraft optionally includes surge tanks 34, 36, which are an integral part of the wing tanks 30, 32, respectively, located within the wings 18, 20 outboard of the wing tanks 24, 26, respectively. Fuel tanks 28-36 include fuel feed pumps 28A, 30A, 32A, 34A, 36A, respectively, that are actuated by the FMS 14, or manually by the flight crew, to cause fuel to flow from the tanks to the engines of the aircraft 12 during flight, thereby adjusting the aircraft center of gravity.

Fuel sensors 38, 40, 42, 44, 46 are positioned in the port surge tank 34, port wing tank 30, central tank 28, starboard wing tank 32, and starboard surge tank 36, respectively to sense the volume of fuel in each of the tanks. In examples, a temperature sensor 47 is located in the port wing 18, and in particular is mounted in the fuel tank 30. Signals from the fuel sensors 38-46 indicative of fuel volume, and a signal from the temperature sensor 47 indicative of fuel temperature are received by the FMS 14, which calculates fuel density, and from the volume and density calculates the fuel mass for each of the tanks 28-36. Fuel sensors 38-46 and temperature sensor 47 are connected to the FMS 14 over an avionics bus 48.

In an exemplary example, the FMS 14 is programmed to calculate a current center of gravity (CG) of the aircraft from the current aircraft fuel weight, calculate a longitudinal trim drag factor for the aircraft from the current CG, and adjust a fuel burn prediction for the aircraft utilizing the longitudinal trim drag factor. The FMS 14 includes a display, which may take the form of a control display unit (CDU) 50, in the flight deck 52 of the aircraft 12. The FMS 14 is programmed to display an adjusted fuel burn prediction of the aircraft 12 on the CDU 50. In one exemplary example, the adjusted fuel burn prediction prompts a pilot to manually adjust a performance of the aircraft. Alternatively, or in addition, the FMS 14 is programmed to adjust the performance of the aircraft 14 automatically.

In an example, the FMS 14 is programmed to adjust a fuel burn prediction continuously during a flight of the aircraft 12, and in particular at least once during each leg of a flightpath of the aircraft. This adjustment may be performed at each waypoint of a flightpath of the aircraft 12. In other examples, the FMS 14 is programmed to allow the pilot to override an automatic adjustment of the performance of the aircraft 12. Adjusting the performance of the aircraft can include one or more of adjusting a fuel burn rate, and selectively adjusting fuel flow from tanks 28, 30, 32, 34, 36 by actuating fuel feed pumps 28A, 30A, 32A, 34A, 36A, respectively, also shown schematically on fuel pump control panel 54, which is connected to the FMS 14 and is located in the flight deck 52. For example, in a typical fuel burn sequence the fuel in the central tank 28 is burned first, then one or more of the wing tanks 30-36. A pilot or other member of the fight crew can, instead, elect to burn fuel in one or more of the wing tanks 30, 32, 34, 26 first, then switch to burn fuel from the central tank 28. In still other examples, the airline can load more fuel in the central tank 28 and direct pilots and/or the FMS to burn it first, or reduce the amount of fuel loaded (dispatched) onto the aircraft 12 for a given flight, in comparison to an amount of fuel loaded onto an aircraft using a fixed CG calculation, which itself reduces fuel burned and is more economical

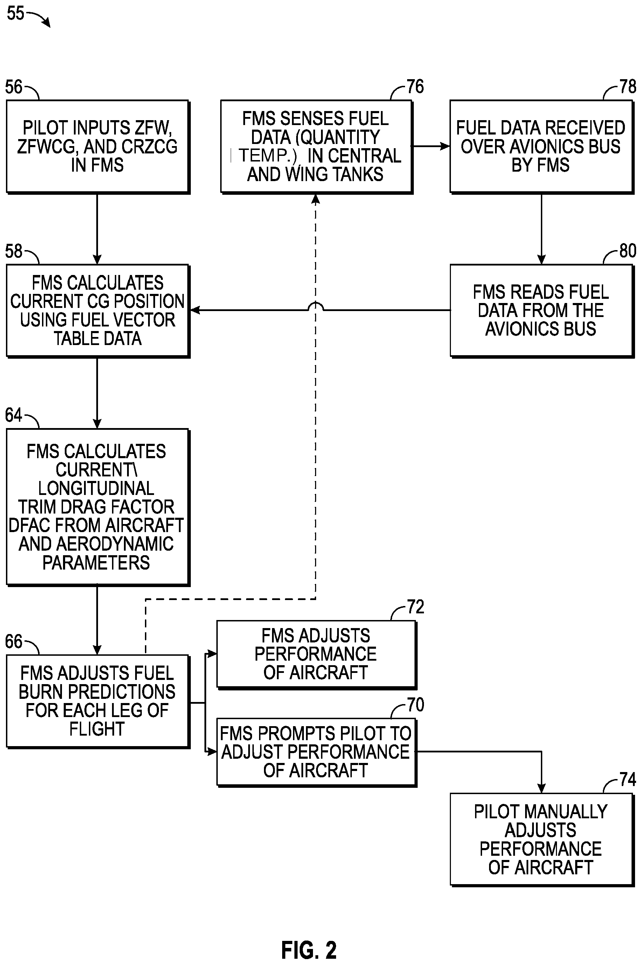

The method for improving fuel efficiency of the aircraft 12 is shown schematically as 55 in Fig. 2. Initially, as part of the pre-flight procedure, the pilot manually inputs values for zero fuel weight (ZFW), zero fuel weight center of gravity (ZFWCG), and cruise CG (CRZCG) into the FMS 12, as shown in block 56. These values are standard for the specific aircraft 12.

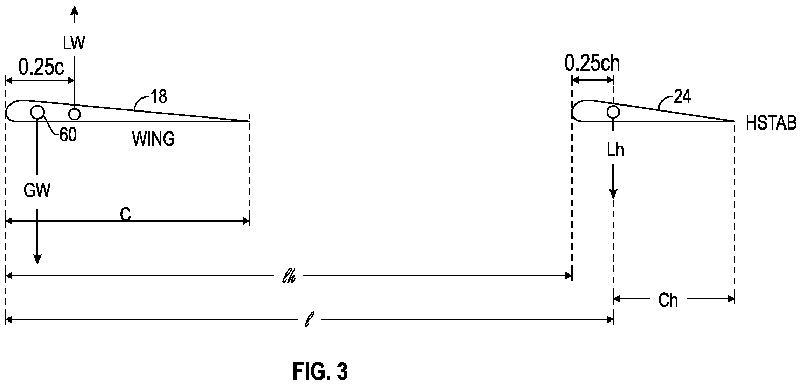

As shown in block 58, after takeoff of the aircraft 12, when at altitude, the FMS 14 calculates the current CG position 60 (Fig. 3) of the aircraft 12 by sensing the current aircraft fuel weight in the fuel tanks 28-36 of the aircraft during a flight of the aircraft, reading the current aircraft fuel weight by the FMS 14, then calculating a current center of gravity position of the aircraft from the current aircraft fuel weight by the FMS. The FMS 14 determines the current CG position 60 of the aircraft 12 using the following calculations. First, the zero fuel weight balance arm (ZFWBA) is determined from the following formula:

$$ZFWBA = LEMAC + ZFWCG * MAC$$

where $LEMAC$ is the leading edge mean aerodynamic chord, $ZFWCG$ is the zero fuel weight center of gravity, and $MAC$ is the mean aerodynamic chord ("C" in Fig. 3). Then, the current CG 60 ($XCG$) of the aircraft 12 is calculated using the following formula:

$$XCG = \frac{ZFWBA * ZFW + WQTYBA * WQTY + CQTYBA * CQTY}{ZFW + WQTY + CQTY}$$

where $WQTYBA$ is fuel balance arm of total fuel quantity in the wings 18, 20, taken from the fuel vector table 62 stored in the FMS 14; $WQTY$ is the fuel volume sensed in the wing tanks 30, 32 (and optionally surge tanks 34, 36) by sensors 38-46; $CQTYBA$ is the fuel balance arm of total fuel quantity in the central tank 28; $CQTY$ is the fuel volume sensed in the central tank. The CG position 60 as a function of a percentage of the $MAC$ $(CG\%)$ is calculated using the formula:

$$CG\% = \frac{XCG - LEMAC}{MAC} \times 100$$

Next, as indicated in block 64, the longitudinal trim drag factor $(Dfac)$ for the aircraft 12 is determined from the current CG position 60 by the FMS 14 utilizing a table 68 stored in the FMS 14 of aircraft and aerodynamic parameters for the aircraft 12. The FMS 14 calculates the $Dfac$ using the following formula, and with reference to Fig. 3:

$$Dfac = \frac{\left(\frac{GW}{qS}\right)^2}{(\pi.A.e).\left(\frac{c}{c} - 0.25\right)} \cdot \frac{\left((cg/100)^2 - (cgref/100)^2 - \left(\frac{2lh}{c}\right).(cg/100 - Cref/100)\right)}{CDo + \frac{\left(\frac{GW}{qS}\right)^2}{(\pi.A.e).\left(\frac{lh}{c} - 0.25\right)}\left(\left(\frac{2lh}{c}\right) - cg/100\right)^2}$$

where $GW$ is the gross weight of the aircraft 12, $cg$ is the current CG position (% c) expressed in terms of MAC, $cgref$ is the reference CG (% c) for where FMS 14 performance tables are generated, $lh$ is the position of the horizontal stabilizer ($HSTAB$) 24, c is the wing mean aerodynamic chord (MAC), $Ch$ is the horizontal stabilizer MAC, A is the wing main aspect ratio, S is the wing reference area, e is the Oswald factor, $CDo$ is the zero lift drag (a function of Mach and Reynolds numbers), $l$ is the distance from the leading edge of the wing 18 to the $lh$, q is the dynamic pressure ($0.5*\rho*V^2$), and S is the wind area.

As shown in block 66, the FMS 14 next calculates an adjusted fuel burn prediction for the aircraft 12 utilizing the longitudinal trim drag factor $Dfac$ using the following formula:

$$Wf = Wfref * (1 + Dfac)$$

where *Wf is* the corrected or adjusted fuel burn between waypoints, and *Wfref* is the fuel burn between waypoints of the flight path of the aircraft 12 using the standard, fixed CG position for that aircraft.

Once the corrected or adjusted fuel burn *Wf* is calculated by the FMS 14, the FMS uses or substitutes that value as the fuel burn prediction between waypoints on the flight path. The FMS 14 displays that adjusted fuel burn prediction of the CDU display 50 in the flight deck 52 of the aircraft 12. Accordingly, as indicated in block 70, FMS 14 prompts the pilot to adjust the performance of the aircraft 12 in response to that displayed adjusted fuel burn prediction. Alternatively, as shown in block 72, the FMS 14 adjusts the performance of the aircraft 12.

In exemplary examples, as shown in block 74, adjusting the performance of the aircraft 12 manually by the pilot includes one or both of adjusting a fuel burn rate of the aircraft and adjusting aircraft fuel tank usage. In an exemplary example, adjusting the burn prediction includes adjusting the fuel burn prediction for a current leg of a flight path of the aircraft 12 (Fig. 1A). And, adjusting the fuel burn prediction incudes sequentially adjusting the fuel burn prediction for each leg of a flight path of the aircraft 12. Adjusting the aircraft fuel tank usage includes selecting a sequence of fuel tanks 28, 30, 32, 34, 36 to be burned by switching on and/or off one or more selected fuel feed pumps 28A, 30A, 32A, 34A, 36A at fuel pump control panel 54. Also in exemplary examples, as shown in block 76, calculating aircraft fuel weight by the FMS 14 includes sensing a quantity and calculating a density of the aircraft fuel in the central tank 28 and wing tanks 30-36. The step of calculating aircraft fuel weight includes calculating aircraft fuel weight in each individual tank of the fuel tanks 28, 30, 32, 34, and 36 of the aircraft 12. As indicated in block 78, the FMS 14 receives fuel data over the avionics bus 48, and in block 80, the FMS reads the fuel data from the avionics bus.

Also in exemplary examples, the process step of sensing the volume of fuel in the fuel tanks 28, 30, 32, 34, and 36 by sensors 38, 40, 42, 44, and 46, respectively, and the steps performed by the FMS 14 of reading the fuel volume in the individual tanks, then calculating the current center of gravity position *cg,* then calculating the longitudinal trim drag factor *Dfac,* and the adjusting the fuel burn prediction *Wf,* are refreshed every cycle of processor operation of the FMS, as indicated by the dashed line in Fig. 2.

In exemplary examples, the step of calculating the current center of gravity position includes reading data from the fuel vector table 62 of the weight and balance manual specific to the aircraft 12, which contained in the FMS 14. The step of calculating the current center of gravity position includes reading data from a table in the FMS 14 including zero fuel weight balance arm, zero fuel weight, fuel balance arm of total fuel quantity in wings 18, 20, fuel volume sensed in wing tanks 30-36, fuel balance arm of total fuel quantity in the central tank 28, and fuel volume sensed in central tank.

The step of calculating the longitudinal trim drag factor *Dfac* includes the FMS 14 reading data from a table of aircraft and aerodynamic parameters 68, including gross weight, current CG position 60, reference center of gravity position, position of a horizontal stabilizer leading edge main aerodynamic chord with reference to a wing leading edge aerodynamic chord, wing mean aerodynamic chord, horizontal stabilizer mean aerodynamic chord, wind main aspect ratio, wind reference area, Oswald factor, and zero lift drag. The step of adjusting the fuel burn prediction includes the FMS 14 calculating a corrected fuel burn projection from a fuel burn using a standard center of gravity position of the aircraft and the longitudinal trim drag factor *Dfac.* The step of adjusting the fuel burn prediction includes the FMS 14 calculating a corrected fuel burn projection sequentially for each leg of a flight path of the aircraft. The FMS 14 automatically adjusts the pitch or trim of the aircraft 12 when the autopilot system, optionally part of the FMS 14 of the aircraft 12, is engaged in response to the changing CG of the aircraft. Alternatively, if the autopilot system is not engaged, the pilot is prompted to manually adjust the trim through the pitch trim button in the control column of the flight deck 52.

The disclosed system 10 and method 55 provide a cost savings as well as a performance optimization to aircraft flight by continuously generating accurate, real-time values of predicted fuel burn. The system utilizes current aircraft avionics systems and requires minimal reprogramming of the FMS 14, and therefore is inexpensive to implement.

While the methods and forms of apparatus disclosed herein are preferred examples of the disclosed method and system for improving aircraft fuel efficiency, it is to be understood that the invention is not limited to these precise methods and apparatus, and that changes may be made therein without departing from the scope of the invention.

**Claims**

1. A method for improving fuel efficiency of an aircraft (12), the method comprising:

   calculating (76) a current aircraft fuel weight in fuel tanks (28, 30, 32, 34, 36) of the aircraft during a flight of the aircraft, wherein calculating is based on sensing a quantity and calculating a density based on a sensed temperature of the aircraft fuel;
   reading (80) the current aircraft fuel weight by a flight management system (14); calculating (58) a current center of gravity position (60) of the aircraft from the current aircraft fuel weight by the flight management system;
   calculating (64) a longitudinal trim drag factor for the aircraft from the current center of gravity position by the flight management system;

calculating (66) an adjusted fuel burn prediction for the aircraft utilizing the longitudinal trim drag factor by the flight management system; and

when an autopilot system of the aircraft (12) is engaged in response to the changing center of gravity position (60), automatically adjusting (72), by the flight management system (14), the pitch or pitch trim of the aircraft in response to the adjusted fuel burn prediction, and when the autopilot system of the aircraft (12) is not engaged in response to the changing center of gravity position (60), prompting (70), by the flight management system (14), a pilot to manually adjust the pitch trim of the aircraft in response to the adjusted fuel burn prediction.

2. The method of claim 1, further comprising adjusting a performance of the aircraft that includes one or both of adjusting a fuel burn rate of the aircraft and adjusting aircraft fuel tank usage.

3. The method of claim 1 or 2, wherein the sensing, the reading, the calculating the current center of gravity, the calculating the longitudinal trim drag factor, and the adjusting the fuel burn prediction are refreshed every cycle of the flight management system.

4. The method of any one of claims 1-3, wherein adjusting the fuel burn prediction includes adjusting the fuel burn prediction for a current leg of a flight path of the aircraft.

5. The method of claim 4, wherein adjusting the fuel burn prediction incudes sequentially adjusting the fuel burn prediction for each leg of a flight path of the aircraft.

6. The method of claim 1, wherein the step of calculating aircraft fuel weight includes calculating aircraft fuel weight in each individual tank of the fuel tanks of the aircraft.

7. The method of any one of claims 1-6, wherein the step of calculating the longitudinal trim drag factor includes utilizing aircraft and aerodynamic parameters (68) for the aircraft.

8. The method of any one of claims 1-7, wherein the step of calculating the current center of gravity position includes reading data from a fuel vector table (62) of a weight and balance manual specific to the aircraft contained in the flight management system.

9. The method of claim 8, wherein the step of calculating the current center of gravity position includes reading data from a table including zero fuel weight balance arm, zero fuel weight, fuel balance arm of total fuel quantity in wings, fuel volume sensed in wing tanks, fuel balance arm of total fuel quantity in central tank, and fuel volume sensed in central tank.

10. The method of claim 9, wherein the step of calculating the longitudinal trim drag factor includes reading data from a table of aircraft and aerodynamic parameters, including gross weight, current center of gravity position, reference center of gravity position, position of a horizontal stabilizer leading edge main aerodynamic chord with reference to a wing leading edge aerodynamic chord, wing mean aerodynamic chord, horizontal stabilizer mean aerodynamic chord, wind main aspect ratio, wind reference area, Oswald factor, and zero lift drag.

11. The method of claim 10, wherein the step of adjusting the fuel burn prediction includes calculating a corrected fuel burn projection from a fuel burn using a standard center of gravity position of the aircraft and the longitudinal trim drag factor.

12. The method of any one of claims 2-5 and 7-11 when dependent on claim 2, , wherein adjusting a performance of the aircraft includes one or more of automatically adjusting the performance by the flight management system, prompting a pilot of the aircraft to adjust the performance, and prompting a pilot to override a performance of the aircraft.

13. A system (10) for improving inflight fuel efficiency of an aircraft (12), the system comprising:

an autopilot system;
a flight management system (14) that can be connected to receive data indicative of a current aircraft fuel weight during a flight of the aircraft, wherein said data comprises a quantity and a temperature of the aircraft fuel;
the flight management system is programmed to calculate a current center of gravity (60) of the aircraft from the current aircraft fuel weight, calculate a longitudinal trim drag factor for the aircraft from the current center of gravity, adjust a fuel burn prediction for the aircraft utilizing the longitudinal trim drag factor; and
the flight management system includes a display (50) in a flight deck of the aircraft that displays the fuel burn prediction of the aircraft wherein,
when the autopilot system is not engaged in response to the changing center of gravity position, , the flight management system is configured to prompt a pilot to manually adjust the pitch trim of the aircraft; and
when the autopilot system is engaged in response to the changing center of gravity position, the flight management system is programmed to adjust the pitch or pitch trim of the aircraft automatically in response to the adjusted fuel burn prediction.

14. The system of claim 13, wherein the flight management system (14) is programmed to adjust a fuel burn prediction continuously during a flight of the aircraft, and in particular at least once during each leg of a flightpath of the aircraft.

15. The system of claim 13, wherein the flight management system (14) is further programmed to adjust a performance of the aircraft by one or both of adjusting a fuel burn rate of the aircraft and adjusting aircraft fuel tank usage.


**Patentansprüche**

1. Verfahren zum Verbessern der Treibstoffeffizienz eines Flugzeugs (12), wobei das Verfahren die Schritte aufweist:

Berechnen (76) eines aktuellen Flugzeugtreibstoffgewichts in Treibstofftanks (28, 30, 32, 34, 36) des Flugzeugs während eines Flugs des Flugzeugs, wobei das Berechnen auf dem Erfassen einer Menge und dem Berechnen einer Dichte des Flugzeugtreibstoffs basierend auf einer erfassten Temperatur des Flugzeugtreibstoffs basiert;
Lesen (80) des aktuellen Flugzeugtreibstoffgewichts durch ein Flugmanagementsystem (14);
Berechnen (58) einer aktuellen Schwerpunktposition (60) des Flugzeugs aus dem aktuellen Flugzeugtreibstoffgewicht durch das Flugmanagementsystem;
Berechnen (64) eines Längstrimmwiderstandsfaktors für das Flugzeug aus der aktuellen Schwerpunktposition durch das Flugmanagementsystem;
Berechnen (66) eines eingestellten Treibstoffverbrauchsvorhersagewertes für das Flugzeug unter Verwendung des Längstrimmwiderstandsfaktors durch das Flugmanagementsystem; und
wenn ein Autopilotsystem des Flugzeugs (12) aktiviert ist, in Antwort auf eine Änderung der Schwerpunktposition (60):
automatisches Einstellen (72) der Neigung oder der Neigungstrimmung des Flugzeugs in Antwort auf den eingestellten Treibstoffverbrauchsvorhersagewert durch das Flugmanagementsystem (14); und
wenn das Autopilotsystem des Flugzeugs (12) nicht aktiviert ist, in Antwort auf eine Änderung der Schwerpunktposition (60):
Auffordern (70) eines Piloten, die Neigungstrimmung des Flugzeugs in Antwort auf den angepassten Treibstoffverbrauchsvorhersagewert manuell einzustellen, durch das Flugmanagementsystem (14).

2. Verfahren nach Anspruch 1, ferner mit dem Einstellen einer Leistung des Flugzeugs, was das Einstellen einer Treibstoffverbrauchsrate des Flugzeugs und/oder das Einstellen einer Treibstofftanknutzung des Flugzeugs beinhaltet.

3. Verfahren nach Anspruch 1 oder 2, wobei der Erfassungsschritt, der Leseschritt, der Schritt zum Berechnen des aktuellen Schwerpunkts, der Schritt zum Berechnen des Längstrimmwiderstandsfaktors und der Schritt zum Einstellen des Treibstoffverbrauchsvorhersagewertes in jedem Zyklus des Flugmanagementsystems aktualisiert werden.

4. Verfahren nach einem der Ansprüche 1 bis 3, wobei das Einstellen des Treibstoffverbrauchsvorhersagewertes das Einstellen des Treibstoffverbrauchsvorhersagewertes für eine aktuelle Teilstrecke einer Flugroute des Flugzeugs aufweist.

5. Verfahren nach Anspruch 4, wobei das Einstellen des Treibstoffverbrauchsvorhersagewertes ein sequentielles Einstellen des Treibstoffverbrauchsvorhersagewertes für jede Teilstrecke einer Flugroute des Flugzeugs aufweist.

6. Verfahren nach Anspruch 1, wobei der Schritt zum Berechnen des Flugzeugtreibstoffgewichts das Berechnen des Flugzeugtreibstoffgewichts in jedem einzelnen Tank der Flugzeugtreibstofftanks aufweist.

7. Verfahren nach einem der Ansprüche 1 bis 6, wobei der Schritt zum Berechnen des Längstrimmwiderstandsfaktors das Verwenden von Flugzeug- und aerodynamischen Parametern (68) für das Flugzeug aufweist.

8. Verfahren nach einem der Ansprüche 1 bis 7, wobei der Schritt zum Berechnen der aktuellen Schwerpunktposition das Lesen von Daten aus einer Treibstoffvektortabelle (62) eines für das Flugzeug spezifischen Beladungs- und Schwerpunkt-Handbuchs aufweist, das im Flugmanagementsystem enthalten ist.

9. Verfahren nach Anspruch 8, wobei der Schritt zum Berechnen der aktuellen Schwerpunktposition das Lesen von Daten aus einer Tabelle aufweist, die den Hebelarm des Flugzeuggewichts ohne Treibstoff, das Flugzeuggewicht ohne Treibstoff, den Treibstoff-Hebelarm der gesamten Treibstoffmenge in den Flügeln, das in den Flügeltanks erfasste Treibstoffvolumen, den Treibstoff-Hebelarm der gesamten Treibstoffmenge im mittleren Tank und das im mittleren Tank erfasste Treibstoffvolumen enthält.

10. Verfahren nach Anspruch 9, wobei der Schritt zum Berechnen des Längstrimmwiderstandsfaktors das Lesen von Daten aus einer Tabelle von Flugzeug- und aerodynamischen Parametern aufweist, die das Gesamtgewicht, die aktuelle Schwerpunktposition, die Referenz-Schwerpunktposition, die Position einer aerodynamischen Haupttiefe der Vorderkante des horizontalen Stabilisators in Bezug auf die aerodynamische Tiefe der Vorderkante des Flügels, die mittlere aerodynamische Flügeltiefe, die mittlere aerodynamische Tiefe des horizontalen Stabilisators, das Wind-Hauptaspektverhältnis, die Wind-Referenzfläche, den Oswald-Faktor und den Luftwiderstand ohne Auftrieb enthält.

11. Verfahren nach Anspruch 10, wobei der Schritt zum Einstellen des Treibstoffverbrauchsvorhersagewertes das Berechnen einer korrigierten Treibstoffverbrauchsprognose aus einem Treibstoffverbrauch unter Verwendung einer Standard-Schwerpunktposition des Flugzeugs und des Längstrimmwiderstandsfaktors aufweist.

12. Verfahren nach einem der Ansprüche 2 bis 5 und 7 bis 11, wenn abhängig von Anspruch 2, wobei das Einstellen einer Leistung des Flugzeugs einen oder mehrere der folgenden Schritte aufweist: automatisches Einstellen der Leistung durch das Flugmanagementsystem, Auffordern eines Piloten des Flugzeugs, die Leistung einzustellen, und Auffordern des Piloten, in eine Leistung des Flugzeugs einzugreifen.

13. System (10) zum Verbessern der Treibstoffeffizienz eines Flugzeugs (12) während des Flugs, wobei das System aufweist:

ein Autopilotsystem;
ein Flugmanagementsystem (14), das verbindbar ist, um Daten zu empfangen, die ein aktuelles Flugzeugtreibstoffgewicht während eines Flugs des Flugzeugs anzeigen, wobei die Daten eine Menge und eine Temperatur des Flugzeugtreibstoffs enthalten,
wobei das Flugmanagementsystem dafür programmiert ist, einen aktuellen Schwerpunkt (60) des Flugzeugs aus dem aktuellen Flugzeugtreibstoffgewicht zu berechnen, einen Längstrimmwiderstandsfaktor für das Flugzeug aus dem aktuellen Schwerpunkt zu berechnen, einen Treibstoffverbrauchsvorhersagewert für das Flugzeug unter Verwendung des Längstrimmwiderstandsfaktors einzustellen, und
das Flugmanagementsystem eine Anzeige (50) in einem Cockpit des Flugzeugs aufweist, die den Treibstoffverbrauchsvorhersagewert des Flugzeugs anzeigt, wobei,
wenn das Autopilotsystem nicht aktiviert ist, in Antwort auf eine Änderung der Schwerpunktposition:
das Flugmanagementsystem dafür konfiguriert ist, einen Piloten aufzufordern, die Neigungstrimmung des Flugzeugs manuell einzustellen, und
wenn das Autopilotsystem aktiviert ist, in Antwort auf eine Änderung der Schwerpunktposition:
das Flugmanagementsystem dafür programmiert ist, die Neigung oder die Neigungstrimmung des Flugzeugs in Antwort auf den eingestellten Treibstoffverbrauchsvorhersagewert automatisch einzustellen.

14. System nach Anspruch 13, wobei das Flugmanagementsystem (14) dafür programmiert ist, einen Treibstoffverbrauchsvorhersagewert während eines Flugs des Flugzeugs kontinuierlich und insbesondere mindestens einmal während jeder Teilstrecke einer Flugroute des Flugzeugs einzustellen.

15. System nach Anspruch 13, wobei das Flugmanagementsystem (14) ferner dafür programmiert ist, eine Leistung des Flugzeugs durch Einstellen einer Treibstoffverbrauchsrate des Flugzeugs und/oder durch Einstellen der Treibstofftanknutzung des Flugzeugs einzustellen.

**Revendications**

1.  Procédé d'amélioration de rendement énergétique d'un aéronef (12), le procédé comprenant :

    le calcul (76) d'un poids de carburant d'aéronef courant dans des réservoirs de carburant (28, 30, 32, 34, 36) de l'aéronef au cours d'un vol de l'aéronef, dans lequel le calcul est basé sur la détection d'une quantité et le calcul d'une densité sur la base d'une température détectée du carburant d'aéronef ;
    la lecture (80) du poids de carburant d'aéronef courant par un système de gestion de vol (14) ;
    le calcul (58) d'une position de centre de gravité courant (60) de l'aéronef à partir du poids de carburant d'aéronef courant par le système de gestion de vol ;
    le calcul (64) d'un coefficient aérodynamique de compensation longitudinale pour l'aéronef à partir de la position de centre de gravité courant par le système de gestion de vol ;
    le calcul (66) d'une prédiction de consommation de carburant ajustée pour l'aéronef en utilisant le coefficient aérodynamique de compensation longitudinale par le système de gestion de vol ; et
    lorsqu'un système de pilotage automatique de l'aéronef (12) est engagé en réponse au changement de la position de centre de gravité (60), l'ajustement automatique (72), par le système de gestion de vol (14), du tangage ou de la compensation en tangage de l'aéronef en réponse à la prédiction de consommation de carburant ajustée, et
    lorsque le système de pilotage automatique de l'aéronef (12) n'est pas engagé en réponse au changement de la position de centre de gravité (60), l'invite (70), par le système de gestion de vol (14), d'un pilote à ajuster manuellement la compensation en tangage de l'aéronef en réponse à la prédiction de consommation de carburant ajustée.

2.  Procédé selon la revendication 1, comprenant en outre l'ajustement d'une performance de l'aéronef qui comprend l'un ou les deux de l'ajustement d'un taux de consommation de carburant de l'aéronef et de l'ajustement d'utilisation de réservoir de carburant d'aéronef.

3.  Procédé selon la revendication 1 ou 2, dans lequel la détection, la lecture, le calcul du centre de gravité courant, le calcul du coefficient aérodynamique de compensation longitudinale, et l'ajustement de la prédiction de consommation de carburant sont actualisés à chaque cycle du système de gestion de vol.

4.  Procédé selon l'une quelconque des revendications 1 à 3, dans lequel l'ajustement de la prédiction de consommation de carburant comprend l'ajustement de la prédiction de consommation de carburant pour un trajet courant d'un plan de vol de l'aéronef.

5.  Procédé selon la revendication 4, dans lequel l'ajustement de la prédiction de consommation de carburant comprend l'ajustement séquentiel de la prédiction de consommation de carburant pour chaque trajet d'un plan de vol de l'aéronef.

6.  Procédé selon la revendication 1, dans lequel l'étape du calcul d'un poids de carburant d'aéronef comprend le calcul d'un poids de carburant d'aéronef dans chaque réservoir individuel parmi les réservoirs de carburant de l'aéronef.

7.  Procédé selon l'une quelconque des revendications 1 à 6, dans lequel l'étape du calcul du coefficient aérodynamique de compensation longitudinale comprend l'utilisation des paramètres d'aéronef et d'aérodynamique (68) de l'aéronef.

8.  Procédé selon l'une quelconque des revendications 1 à 7, dans lequel l'étape du calcul de la position de centre de gravité courant comprend la lecture de données d'une table vectorielle de carburant (62) d'un manuel de masse et de centrage spécifique à l'aéronef contenu dans le système de gestion de vol.

9.  Procédé selon la revendication 8, dans lequel l'étape du calcul de la position de centre de gravité courant comprend la lecture de données d'une table comprenant un bras d'équilibrage de masse sans carburant, une masse sans carburant, un bras d'équilibrage de carburant de quantité totale de carburant dans des ailes, un volume de carburant détecté dans des réservoirs d'aile, un bras d'équilibrage de carburant de quantité totale de carburant dans un réservoir central, et un volume de carburant détecté dans un réservoir central.

10. Procédé selon la revendication 9, dans lequel l'étape du calcul du coefficient aérodynamique de compensation longitudinale comprend la lecture de données d'une table de paramètres d'aéronef et d'aérodynamique, comprenant un poids brut, une position de centre de gravité courant, une position de centre de gravité de référence, une position

**EP 3 476 726 B1**

d'une corde aérodynamique moyenne de bord d'attaque de stabilisateur horizontal par rapport à une corde aérodynamique de bord d'attaque d'aile, une corde aérodynamique moyenne d'aile, une corde aérodynamique moyenne de stabilisateur horizontal, un rapport de forme moyen d'aile, une aire de référence d'aile, un facteur d'Oswald, et une portance-traînée nulle.

11. Procédé selon la revendication 10, dans lequel l'étape de l'ajustement de la prédiction de consommation de carburant comprend le calcul d'une projection de consommation de carburant corrigée à partir d'une consommation de carburant en utilisant une position de centre de gravité standard de l'aéronef et le coefficient aérodynamique de compensation longitudinale.

12. Procédé selon l'une quelconque des revendications 2 à 5 et 7 à 11 lorsqu'elles dépendent de la revendication 2, dans lequel l'ajustement d'une performance de l'aéronef comprend un ou plusieurs parmi l'ajustement automatique de la performance par le système de gestion de vol, l'invite d'un pilote de l'aéronef à ajuster la performance, et l'invite d'un pilote à prendre le contrôle manuel d'une performance de l'aéronef.

13. Système (10) d'amélioration de rendement énergétique en vol d'un aéronef (12), le système comprenant :

un système de pilotage automatique ;
un système de gestion de vol (14) qui peut être connecté pour recevoir des données indicatives d'un poids de carburant d'aéronef courant au cours d'un vol de l'aéronef, dans lequel lesdites données comprennent une quantité et une température du carburant d'aéronef ;
le système de gestion de vol est programmé pour calculer un centre de gravité courant (60) de l'aéronef à partir du poids de carburant d'aéronef courant, calculer un coefficient aérodynamique de compensation longitudinale pour l'aéronef à partir du centre de gravité courant, ajuster une prédiction de consommation de carburant de l'aéronef en utilisant le coefficient aérodynamique de compensation longitudinale ; et
le système de gestion de vol comprend un affichage (50) dans un poste de pilotage de l'aéronef qui affiche la prédiction de consommation de carburant de l'aéronef, dans lequel
lorsque le système de pilotage automatique n'est pas engagé en réponse au changement de la position de centre de gravité, le système de gestion de vol est configuré pour inviter un pilote à ajuster manuellement la compensation en tangage de l'aéronef ; et
lorsque le système de pilotage automatique est engagé en réponse au changement de la position de centre de gravité, le système de gestion de vol est programmé pour ajuster automatiquement le tangage ou la compensation en tangage de l'aéronef en réponse à la prédiction de consommation de carburant ajustée.

14. Système selon la revendication 13, dans lequel le système de gestion de vol (14) est programmé pour ajuster continuellement une prédiction de consommation de carburant au cours d'un vol de l'aéronef, et en particulier au moins une fois au cours de chaque trajet d'un plan de vol de l'aéronef.

15. Système selon la revendication 13, dans lequel le système de gestion de vol (14) est en outre programmé pour ajuster une performance de l'aéronef par l'un ou les deux de l'ajustement d'un taux de consommation de carburant de l'aéronef et de l'ajustement d'utilisation de réservoir de carburant d'aéronef.

**FIG. 1**

**FIG. 1A**

55 ⌐

56 ⌐
PILOT INPUTS ZFW, ZFWCG, AND CRZCG IN FMS

76 ⌐
FMS SENSES FUEL DATA (QUANTITY TEMP.) IN CENTRAL AND WING TANKS

78 ⌐
FUEL DATA RECEIVED OVER AVIONICS BUS BY FMS

58 ⌐
FMS CALCULATES CURRENT CG POSITION USING FUEL VECTOR TABLE DATA

80 ⌐
FMS READS FUEL DATA FROM THE AVIONICS BUS

64 ⌐
FMS CALCULATES CURRENT\ LONGITUDINAL TRIM DRAG FACTOR DFAC FROM AIRCRAFT AND AERODYNAMIC PARAMETERS

72 ⌐
FMS ADJUSTS PERFORMANCE OF AIRCRAFT

66 ⌐
FMS ADJUSTS FUEL BURN PREDICTIONS FOR EACH LEG OF FLIGHT

70 ⌐
FMS PROMPTS PILOT TO ADJUST PERFORMANCE OF AIRCRAFT

74 ⌐
PILOT MANUALLY ADJUSTS PERFORMANCE OF AIRCRAFT

FIG. 2

HSTAB

24

0.25ch

Lh

Ch

ℓₕ

ℓ

FIG. 3

18

WING

LW

0.25c

60

GW

C

**EP 3 476 726 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2362289 A2
- WO 2005065071 A2